# EUROPEAN PATENT SPECIFICATION

(11) **EP 0 977 962 B1**
(45) Date of publication and mention of the grant of the patent: **30.01.2002**
(21) Application number: 98917318.2
(22) Date of filing: 21.04.1998
(51) Int. Cl.: F21V 8/00

(54) **AN ILLUMINATOR**
BELEUCHTUNGSVORRICHTUNG
DISPOSITIF D'ECLAIRAGE

(30) Priority: 22.04.1997 GB 9708147
(43) Date of publication of application: 09.02.2000
(73) Proprietor: Ford Global Technologies, Inc., Dearborn, Michigan 48126 (US)
(72) Inventor: LEPLEY, Geoffrey, Peter, Essex SS8 8BT (GB); BIJLHOT, Joep, Enfield Middlesex EN1 3UW (GB)
(74) Representative: Messulam, Alec Moses
(86) International application number: PCT/GB98/00960
(87) International publication number: WO 98/48216

(56) References cited:
- EP-A- 0 417 359
- EP-A- 0 732 679
- WO-A-88/05589
- DE-A- 4 301 340
- DE-A- 19 521 254
- US-A- 4 576 436
- US-A- 5 390 085

## Description

### Field of Invention

The invention relates to an illuminator and is of particular advantage for use in illuminating dials and knobs.

### Background of the invention

Faceted light pipes are well known for the illumination and back lighting of liquid crystal displays where a planar surface is back lit by a tapered light pipe having a planar front surface and a faceted back surface. Light is fed into the light pipe and the light travels along the light pipe until it hits a facet whereupon it is reflected towards and through the front surface. The light pipe includes a series of angled facets along its length thus illuminating the whole surface overlying the light pipe.

### Summary of the invention

According to the invention there is provided an illuminator formed as a light pipe having a substantially planar front surface and a faceted back surface comprising a series of angled facets arranged to reflect light towards and through the planar front surface, and a light input port through which light is fed into the light pipe, wherein the light pipe is looped to define an endless light path, the walls of the looped light path are arranged such that light entering the light pipe travels about the loop, and two light input ports are provided for introducing light tangentially into the looped light path to provide even illumination over the whole of the front surface.

Thus the loop may surround an object which needs to be illuminated rather than having to illuminate a whole surface part of which may lie behind a solid object through which light may not pass.

Once light has entered the tapered light pipe, it travels about the light path by total internal reflection so that the energy required to light such a loop is kept low.

In order for there to be minimal light losses, the loop is preferably annular or partially annular so that it may be used to illuminate round objects such as dials, knobs etc. This is particularly useful for lighting dials and knobs on an instrument panel of for example a motor vehicle.

In the preferred embodiment of the invention, the light pipe is tapered, the rear surface being stepped at each reflective facet such that the distance between the front and rear surfaces of the light pipe decreases with increasing distance from the light input port.

Preferably, the illuminator includes two light input ports arranged on diametrically opposite regions of the looped light pipe in order to achieve more even illumination.

The light pipe is typically of a clear acrylic or polycarbonate material.

Preferably, the light source comprises light emitting diodes.

Though it is not essential for the rays entering through the light input ports to be collimated, there may be cases, for example when the light path is long or and the loop diameter is large, when collimated light will help to ensure that the entire loop is illuminated.

It is preferred that the light pipe should taper along its length. When two light input ports are provided, the light pipe may taper from a maximum cross-section at one light input port to a minimum at the next light input port.

Preferably each light input port comprises a first convex lens arranged such that its principal focus lies substantially at the light source such that rays of light from the light source after passing through the lens are substantially parallel to the principal axis of the first lens, and an auxiliary light collecting device, extending from the periphery of the first lens, and comprising a plurality of secondary convex lenses, the principal focus of each secondary lens substantially coinciding with the light source and the principal axis of each secondary lens lying at an angle to the principal axis of the first lens, each secondary lens producing collimated light at an angle to the principal axis of the first lens, and for each secondary lens, a reflective surface arranged such that collimated light having passed through the secondary lens is reflected to a direction substantially parallel to the principal axis of the first lens.

Typically the depth of the light path is between 1cm and 5cm, and the diameter of the curved loop is up to 20cm.

### Brief description of the drawings

The invention will now be described further, by way of example, with reference to the accompanying drawings, in which:
Figure 1 is a perspective view from behind of a light pipe illuminator of the invention;
Figure 2 is a section through part of Figure 1; and
Figure 3 is a section similar to that of Figure 2 showing an alternative embodiment of the invention.

### Description of the Preferred Embodiment

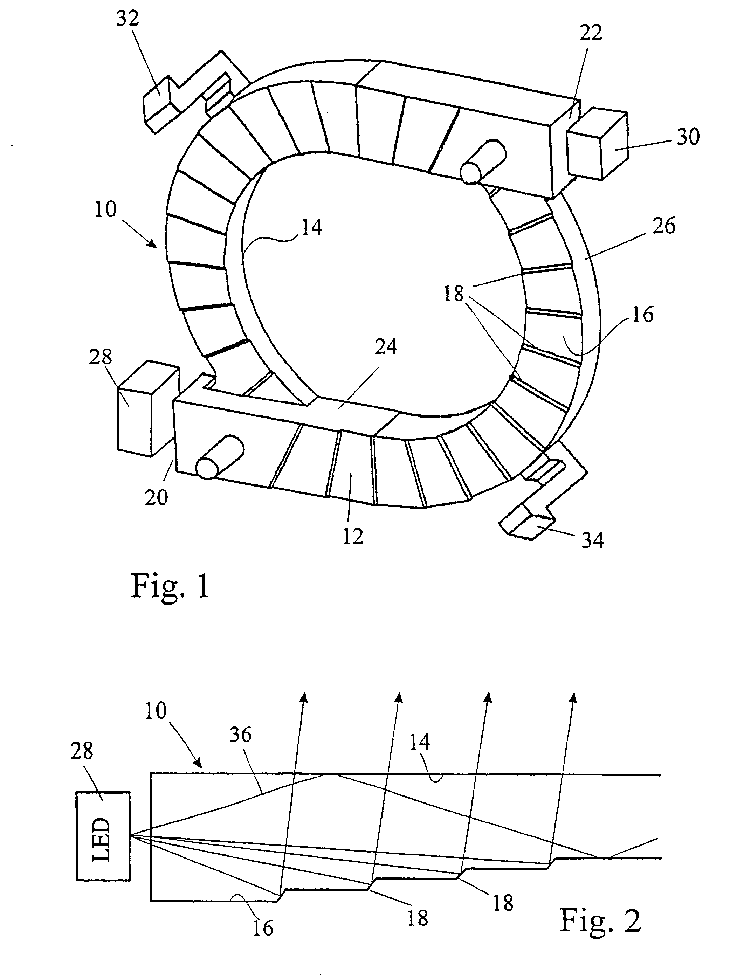

In Figures 1 and 2, a light pipe illuminator 10 comprises a looped light pipe 12 made up of two tapering sections which together defiled an endless light path. The looped light pipe 12 has a substantially planar front surface 14 and a faceted rear surface 16 comprising a series of angled facets 18 arranged about the loop to reflect light towards and through the planar front surface 14. Each section of the light pipe 12 has a respective light input port 20, 22 through which light is fed from a respective LED 28, 30 into the light pipe 12 substantially along the light path. The side walls 24 and 26 of the light pipe are arranged such that light entering the light pipe 3 undergoes total internal reflection and therefore continues to travel about the loop until reflected by one of the facets 18 to exit through the front face 14, as illustrated in Figure 2.

The illustrated illuminator has two light input ports in order to imorove the evenness of the illumination. Using a single light input port, the light intensity tends to reduce noticeably with the angular distance from the light input port, whereas two light input ports provide uniform halo lighting. Of course, one can use more that two light input ports but that merely adds unnecessarily to the cost and complexity.

The light pipe is preferably made of moulded polycarbonate and includes mounting brackets 32, 34 for the mounting the illuminator 1 about the item to be illuminated. As the light path is part annular, it may be placed over and around a dial or it may be used to illuminate round knobs upon a car radio.

In operation, light from the LED's 28, 30 is fed into the light pipe 12 through the two diametrically opposed light input ports 20, 22 and then passes along the light path by total internal reflection until some of the rays impinge upon the facets 18 and are reflected towards and through planar front surface 14 to illuminate the annulus.

The light pipe 12 tapers because the facets 18 are arranged in steps which decrease the depth of the light pipe 3 in a direction away from the light input ports 20 and 22. In a practical embodiment in which the illuminator has a diameter of 14.8 cm, the depth of the light pipe 12 may decrease typically from 4 cm to 1.8 cm along half the light path in an anti-clockwise direction, as viewed in Figure 1.

In the case of the embodiment of Figures 1 and 2, the light from the LED's 28 and 30 enters the light pipe 12 through a planar surface and is not collimated. As a result, as represented by the light ray designated 36 in Figure 2, light can undergo total internal reflection from the front and rear faces 14 and 16 of the light pipe before impinging on one of the reflecting facets 18.

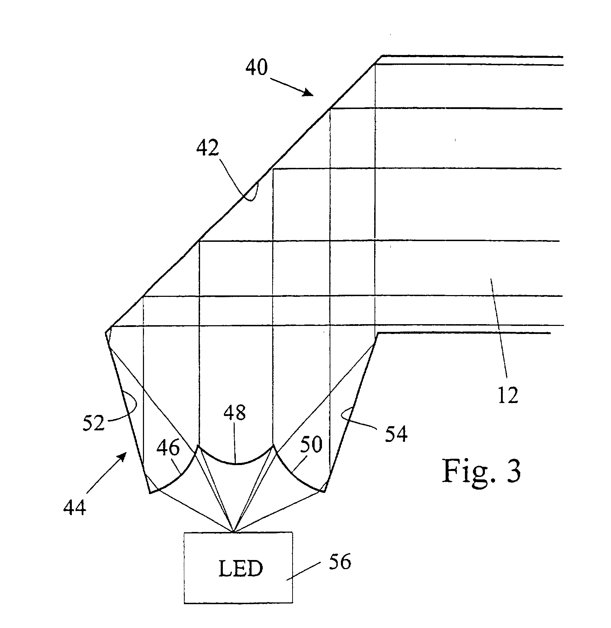

The light input port of the alternative embodiment of the invention shown in Figure 3 differs from the planar light input ports 20 and 22 previously described in two respects. First, the light entering the light pipe is collimated. Second, the light enters the light pipe at right angles to the light path rather than directly along it. This allows the LEDS to be directly mounted on a circuit board to which the illuminator is attached by means of the mounting brackets 32 and 34.

In Figure 3, the light input port generally designated 40 has a reflective surface 42 arranged at an angle to the light path defined by the light pipe 12. The surface 42 is arranged to turn the light from a collimator section, generally designated 44, through a right angle, to avoid the need for supporting the LED 56 in the same plane as the light pipe 12.

The collimator 44 could be formed as a single lens or as a Fresnel lens but the one illustrated has three lens elements 46, 48 and 50. The light collimated by the lens element 48 passes directly towards the reflective surface 42, while the light collimated by the lens elements 46 and 50 is first reflected by a respective reflective facet 52, 54 before being reflected by the surface 42 into the light pipe.

## Claims

1. An illuminator. formed as a light pipe (12) having a substantially planar front surface (14) and a faceted back surface (16) comprising a series of angled facets (18) arranged to reflect light towards and through the planar front surface (14), and a light input port (20, 22; 40) through which light is fed into the light pipe (12), wherein the light pipe (12) is looped to define an endless light path, the walls (24, 26) of the looped light path are arranged such that light entering the light pipe (12) travels about the loop, and two light input ports (20, 22) are provided for introducing light tangentially into the looped light path to provide even illumination over the whole of the front surface (14).

2. An illuminator as claimed in claim 1, wherein the light pipe is tapered, the rear surface (16) being stepped at each reflective facet (18) such that the distance between the front (14) and rear (16) surfaces of the light pipe decreases with increasing distance from the light input port (20, 22).

3. An illuminator as claimed in claim 1 or 2, in which the light path is substantially annular.

4. An illuminator as claimed in any one of the preceding claims, in which the light pipe is of clear acrylic or polycarbonate material.

5. An illuminator as claimed in any one of the preceding claims, in which the light source comprises at least one light emitting diode (28, 30; 56).

6. An illuminator as claimed in any preceding claim, in which each light input port (40) includes means for collimating the light entering the light pipe (12).

7. An illuminator as claimed in any preceding claim, wherein each input port includes a reflective surface (42) for enabling a light source (56) supplying light to the light input port (40) to be mounted in a plane different from that of the light pipe (12).

## Patentansprüche

1. Als Lichtleiter (12) ausgebildete Beleuchtungsvorrichtung mit einer im wesentlichen ebenen Frontfläche (14) und einer facettierten Rückseite (16) mit einer Reihe von abgewinkelten Facetten (18), die derart angeordnet sind, daß sie Licht zur und durch die ebene Frontfläche (14) hindurch reflektieren, und mit einer Lichteingangsöffnung (20, 22; 40), durch welche Licht in den Lichtleiter (12) eingeleitet wird, worin der Lichtleiter (12) zu einer Schleife gebogen ist, so daß er einen endlosen Lichtpfad definiert, wobei die Wände (24, 26) des schleifenförmigen Lichtpfades so angeordnet sind, daß in den Lichtleiter (12) eintretendes Licht um die Schleife läuft, und wobei zwei Lichteingangsöffnungen (20, 22) jeweils zur tangentialen Einleitung des Lichtes in den schleifenförmigen Lichtpfad vorgesehen sind, um so eine gleichmäßige Beleuchtung über die gesamte Frontfläche (14) zu erreichen.

2. Beleuchtungsvorrichtung nach Anspruch 1, worin sich der Lichtleiter verjüngt, wobei die Rückseite (16) an jeder reflektierenden Facette (18) stufenartig geformt ist, so daß der Abstand zwischen der Frontfläche (14) und der Rückseite (16) des Lichtleiters mit zunehmendem Abstand von der Lichteingangsöffnung (20, 22) abnimmt.

3. Beleuchtungsvorrichtung nach Anspruch 1 oder 2, worin der Lichtpfad im wesentlichen ringförmig verläuft.

4. Beleuchtungsvorrichtung nach einem beliebigen der vorangehenden Ansprüche, worin der Lichtleiter aus klarem Acrylglas oder Polycarbonatwerkstoff besteht.

5. Beleuchtungsvorrichtung nach einem beliebigen der vorangehenden Ansprüche, worin die Lichtquelle von wenigstens einer Leuchtdiode (28, 30; 56) gebildet wird.

6. Beleuchtungsvorrichtung nach einem beliebigen der vorangehenden Ansprüche, in welchem jede Lichteingangsöffnung (40) Mittel zur Bündelung des in den Lichtleiter (12) eintretenden Lichtes aufweist.

7. Beleuchtungsvorrichtung nach einem beliebigen der vorangehenden Ansprüche, worin jede Lichteingangsöffnung eine reflektierende Fläche (42) aufweist, die ermöglicht, daß eine die Lichteingangsöffnung (42) mit Licht speisende Lichtquelle (56) in einer Ebene montiert werden kann, die von derjenigen des Lichtleiters unterschiedlich ist.

## Revendications

1. Illuminateur fabriqué sous forme d'un conduit de lumière (12) comportant une surface avant sensiblement plane (14) et une surface arrière munie de facettes (16) comprenant une série de facettes faisant des angles (18) disposées de façon à réfléchir la lumière en direction de la surface avant plane (14) et au travers de celle-ci, et un orifice d'entrée de lumière (20, 22 ; 40) au travers duquel la lumière est injectée dans le conduit de lumière (12), dans lequel le conduit de lumière (12) est en forme de boucle pour définir un trajet de lumière sans fin, les parois (24, 26) du trajet de lumière en boucle sont disposées de telle sorte que la lumière pénétrant dans le conduit de lumière (12) se propage autour de la boucle, et deux orifices d'entrée de lumière (20, 22) sont ménagés en vue d'introduire la lumière tangentiellement dans le trajet de lumière en boucle afin de réaliser une illumination régulière sur la totalité de la surface avant (14).

2. Illuminateur selon la revendication 1, dans lequel le conduit de lumière est effilé, la surface arrière (16) étant étagée à chaque facette réfléchissante (18) de sorte que la distance entre les surfaces avant (14) et arrière (16) du conduit de lumière diminue avec une distance croissante par rapport à l'orifice d'entrée de lumière (20, 22).

3. Illuminateur selon la revendication 1 ou 2, dans lequel le trajet de la lumière est sensiblement annulaire.

4. Illuminateur selon l'une quelconque des revendications précédentes, dans lequel le conduit de lumière est constitué d'un matériau de polycarbonate acrylique ou transparent.

5. Illuminateur selon l'une quelconque des revendications précédentes, dans lequel la source de lumière comprend au moins une diode électroluminescente (28, 30 ; 56).

6. Illuminateur selon l'une quelconque des revendications précédentes, dans lequel chaque orifice d'entrée de lumière (40) comprend un moyen destiné à collimater la lumière pénétrant dans le conduit de lumière (12).

7. Illuminateur selon l'une quelconque des revendications précédentes, dans lequel chaque orifice d'entrée comprend une surface réfléchissante (42) destinée à permettre qu'une source de lumière (56) fournissant de la lumière à l'orifice d'entrée de lumière (40) soit montée dans un plan différent de celui du conduit de lumière (12).
